Europäisches Patentamt

(19) European Patent Office

Office européen des brevets

(11) Publication number: **0 249 463**
**A2**

(12) **EUROPEAN PATENT APPLICATION**

(21) Application number: **87305141.1**

(22) Date of filing: **10.06.87**

(51) Int. Cl.⁴: **C 10 L 1/02**
// C11C3/00

(30) Priority: **11.06.86 AU 6362/86**

(43) Date of publication of application:
**16.12.87 Bulletin 87/51**

(84) Designated Contracting States:
**AT BE CH DE ES FR GB GR IT LI LU NL SE**

(71) Applicant: **BIO-ENERGY TECHNOLOGY LTD.**
**Suite 1, Bristol House 80A Southampton Row**
**London WC1B 4BA (GB)**

(72) Inventor: **Hoe Mun Lim, Edward**
**56 McKenzie Street**
**Leichhardt New South Wales 2040 (AU)**

(74) Representative: **Collier, Jeremy Austin Grey et al**
**J.A.Kemp & Co. 14, South Square Gray's Inn**
**London WC1R 5EU (GB)**

(54) Bio-fuel production.

㊵ The invention relates to the production of fuel from triglycerides by a two step process comprising:

(1) reacting a crude triglyceride containing substance with an alkanol in the presence of at least one water soluble catalyst so as to convert the fatty acids of the triglyceride containing substance to alkyl esters thereof, and

(2) washing the product of step 1 in the presence of an aqueous wash preparation so as to form an aqueous/organic phase system, wherein said catalyst(s) is/are washed from the reaction mixture into the aqueous phase.

An apparatus suitable for washing a first phase of a two phase liquid with the second phase of the liquid, comprising a mixing tank (1) containing said two phase liquid, a means for forming droplets (24) of the said second phase within the first phase, and a means for mixing the droplets (25) throughout the first phase without producing an emulsion of the two liquids is also provided by the invention.

## Description

## BIO-FUEL PRODUCTION

### TECHNICAL FIELD

The present invention relates to the production of fuels from triglyceride containing substances such as seed oils or vegetable oils that are substantially unrefined, tallow, animal fats and oils.

### BACKGROUND ART

It has been shown that diesel engines can be run on vegetable oils, such as palm oil, peanut oil, or sunflower oil. The tests, generally using crude degummed oils, have shown that power output and brake thermal efficiency values are comparable to those obtained with distillate. However fuel filter plugging and cold starting difficulties have been noted. In longer-term tests, carbon deposits have built up around the injection nozzles and the cylinder heads. These deposits are thought to be the consequence of the high viscosity of the seed oils which are as much as nine times as viscous as distillate.

Both the physical and chemical properties of vegetable oils can be changed so as to bring them closer to those properties of distillate. By converting long chain fatty acids in the vegetable oils to alkyl esters through transesterification reactions, it appears that the problem of carbon deposits resulting from the use of unmodified vegetable oils can be substantially reduced.

However, because the yield and purity of the transesterification product esters is affected by the presence of impurities in vegetable oils, low quality crude vegetable oil has not been successfully used as a viable starting material for such transesterification reactions. Rather substantially pure refined vegetable oil, normally produced by the caustic refining of crude oil, or good quality crude oils of low free fatty acid content are the starting materials of preference.

It is not always possible or practical to achieve a low free fatty acid content in crude oils. This applies particularly to on-farm production where stringent quality control is not practical. Furthermore, good quality oils of low free fatty acid content command a premium price and are therefore less econimical to convert to fuel. Moreover, activity of enzymes in certain oil types, such as palm oil, rice bran oil and animal tallows, causes rapid degradation, and consequently, even with strict quality control, high free fatty acid contents are common in these oils.

The refining of the crude oil is necessarily expensive and leads to substantial refining losses, particularly where the crude oil has a high free fatty acid content. Furthermore, due to the nature of the refining step it is not necessarily suited to a small-scale commercial or on-farm operation and there is therefore substantial handling involved in collecting, refining, and transesterifying the crude oil, and eventually supplying ester/diesel substitute to potential users.

### DISCLOSURE IF THE INVENTION

The present invention provides a process for the production of a fuel material from triglyceride containing substances including crude vegetable oils, seed oils, tallow and animal fats and oils, or mixtures therof, which substantially overcomes the above disadvantages.

The invention further provides apparatus for use with the process.

Herein there is disclosed a process for the production of a bio-fuel comprising the steps of:

(1) reacting a crude triglyceride containing substance with an alkanol in the presence of at least one water soluble catalyst so as to convert the fatty acids of the triglyceride containing substance to alkyl esters thereof, and

(2) washing the product of step 1 in the presence of an aqueous wash preparation so as to form an aqueous/organic phase system, wherein said catalyst(s) is/are washed from the reaction mixture into the aqueous phase.

The apparatus employed to carry out the process of the present invention comprises a mixing tank suitable for washing one phase of a two phase liquid with the other phase of the liquid. The mixing tank comprises means for forming droplets of one phase within the other phase, and a means located within the other phase for mixing said droplets therethrough.

The present invention also provides a method of washing a hydrophobic liquid with an aqueous liquid comprising forming droplets of the aqueous liquid within the hydrophobic liquid, mixing said droplets through said hydrophobic liquid and allowing the aqueous droplets to settle out of the hydrophobic liquid.

According to another aspect of the invention there is disclosed both an apparatus for use in step 2 of the process and a method of using same.

### BRIEF DESCRIPTION OF THE DRAWINGS

Fig. 1 is a schematic flow-diagram of the process of the present invention.

Fig. 2 is a schematic representation of a mixing tank for use in the washing stage of the present invention.

Fig. 3 is a graph illustrating the kinetics of the acid catalysed reaction between free fatty acid (FFA) in crude sunflower oil and methanol.

Fig. 4 is a graph illustrating the effect of moisture content on the esterification of FFA in crude oil and methanol.

Fig. 5 is a graph illustrating the effect of acid on the separation of water from washed ester.

Fig. 6 is a graph illustrating the effect of temperature on the separation of water from washed ester.

### BEST MODES OF CARRYING OUT THE INVENTION

The triglyceride containing substance used to carry out the invention is preferably a crude vegetable oil, seed oil, tallow or animal fat or oil.

It is also preferable that the crude triglyceride containing substance be pre-dried when it is assayed to have a high FFA content.

Preferred alkanols have up to six carbon atoms, are straight or branched chain and may have one or more double or triple bonds. They may also be substituted by substituents which do not adversely affect the combustion properties of the fuel produced.

Preferably methanol and/or ethanol are used as the alkanol.

In a preferred form of the invention, the catalysts comprise an esterification catalyst to convert free fatty acids to esters and a transesterification catalyst to convert triglyceride fatty acids to esters, more preferably the transesterification catalyst comprises a base such as sodium hydroxide and a surfactant such as nonylphenol ethoxylate. The surfactant facilitates separation of the products after reaction.

In a further preferment, said esterification catalyst is an acidic catalyst, such as sulfuric acid, that is added to the triglyceride containing substance first and, once substantially all the free fatty acids have been converted, then a basic transesterification catalyst, such as sodium hydroxide, is added in excess to both neutralize any remaining acidic esterification catalyst and catalyse the tranesterification step.

The preferred wash preparation comprises a sufactant such as nonylphenol ethoxylate, a strong salt solution such as sodium chloride and a desaponificant such as phosphoric acid.

Preferably, the process of the invention uses the abovementioned method washing a hydrophobic liquid in step 2 of the process, most preferably by means of the above described apparatus.

In processes for the production of a diesel substitute where a crude triglyceride containing substance is reacted with lower alcohols in the presence of the water soluble transesterification catalyst to convert the long chain fatty acids of the substance to their lower alkyl esters, the invention provides an improvement wherein the water soluble esterification catalyst is also added to said triglyceride containing substance to convert any free fatty acids present in the substance to lower alkyl esters thereof.

Preferably the reaction product is washed with a wash preparation comprising a surfactant and a strong salt solution to act as demulsifiers to counter the presence of emulsifiers such as gums and glycerol in the product, as well as a desaponificant to break down soaps present in the product and thereby prevent water being held up in the organic phase.

In a preferred embodiment of the invention, the apparatus comprises a tank having a propellor located at the interface of the two phases of the liquid contained within the tank, said propellor drivable by means of a motor attached via a driveshaft to the propellor such that the propellor forms droplets of the lower phase liquid in the upper phase liquid, and attached to the same drive shaft in the upper phase liquid is a mixing means, such as paddles or flat blades, for mixing the bubbles throughout the upper phase without producing an emulsion.

Preferably, mixing means are provided at the aqueous/organic interphase whereby droplets of water are drawn out of the aqueous phase without emulsifying the two phases, the droplets are distributed throughout the organic phase to accumulate impurities within the droplets and the impurities are distributed into the aqueous phase one the droplets return into the aqueous phase.

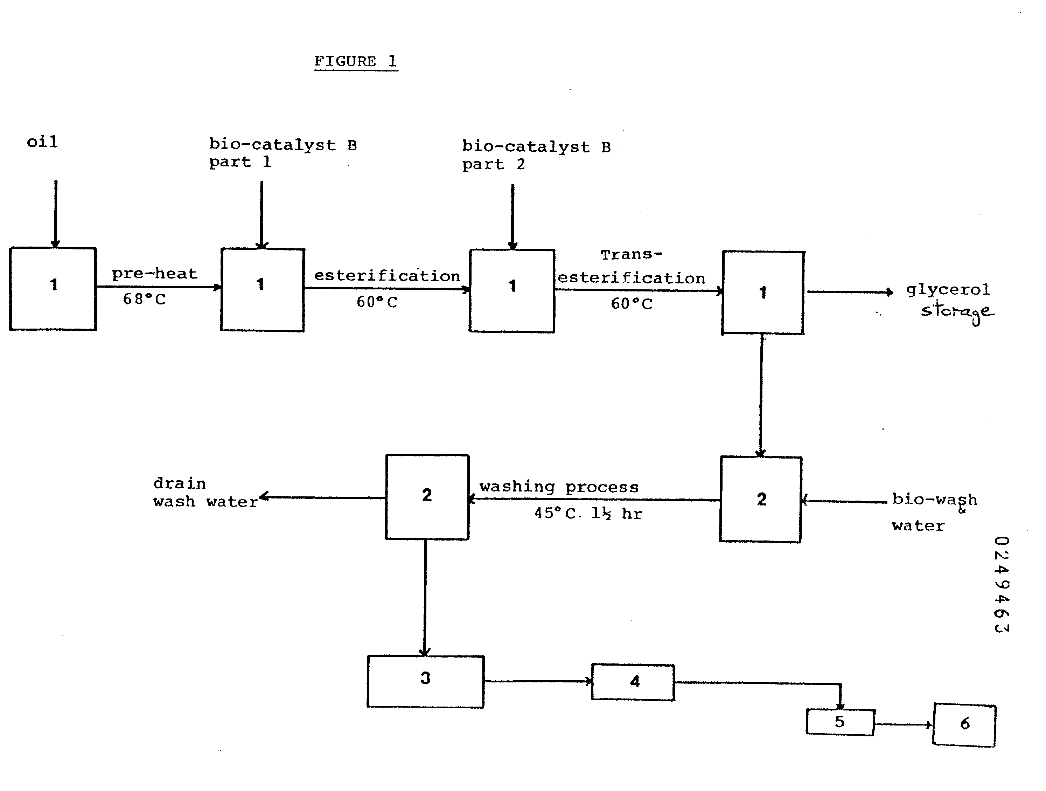

As illustrated in Fig. 1, a crude triglyceride containing substance which has been assayed to determine its FFA content is placed in tank 1 and pre-heated to a predetermined temperature. If the substance has a high FFA content then it is also pre-dried and when the required temperature is achieved, the substance is reacted with a lower alcohol such as methanol which is added thereto together with a first catalyst such as sulfuric acid to thereby reduced the FFA content of the substance.

If the substance has a low FFA content then when it reaches the predetermined temperature or otherwise once the FFA content has been substantially eliminated, a lower alcohol such as methanol is added thereto together with a catalyst such as sodium hydroxide and a surfactant such as Teric (Trade Mark) marketed by ICI. The mixture is stirred or agitated and is preferably heated to at least about 60°C. The mixture is then left to cool and stand for a predetermined period, during which time the ester product separates from a heavier glycerol by-product.

The ester product is then transferred to a washing tank 2, and contacted with a wash preparation such as surfactant, phosphoric acid and sodium chloride, and an appropriate quantity of wash water. The mixture is agitated and then left to stand for separation of the phases. The ester phase can be removed from washing tank 2 to fuel storage tank 6 via a centrifuge 3, a water haze filter 4 and a fuel filter 5. Optionally, a by-product of the transesterification process, glycerol, is recovered from tank 1 at the completion of the transesterification process.

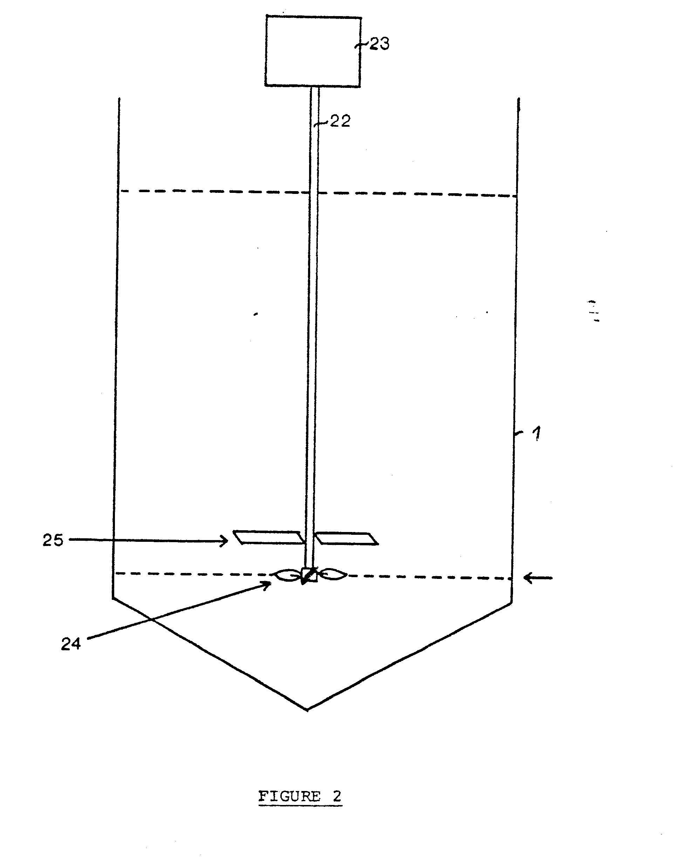

The mixing tank of Fig. 2 comprises a stainless steel tank 1 into which projects shaft 22 that is connected to a motor 23. The other, free end of the shaft 22 has a small diameter propellor 24 mounted thereon and spaced apart therefrom and towards the fixed end of the shaft 22 is a pair of flat blades 25 projecting substantially perpendicularly from and set at an angle to the length of the shaft 22.

The propellor is on the interphase of the water/ester layers and when driven by the motor 23, during mixing it has a blade tip velocity in the range of from 350 mm/sec to 400mm/sec. The action of this propellor 24 is to break off droplets of water from the water phase without emulsifying the water and ester. The upper pair of blades 25 distribute the water droplets through the bulk ester phase. This facilitates mass transfer of the impurities into the droplets. As the water droplets fall back into the bulk water phase the impurities are distributed into the water. This washing by mixing process is completed after about 1 hour.

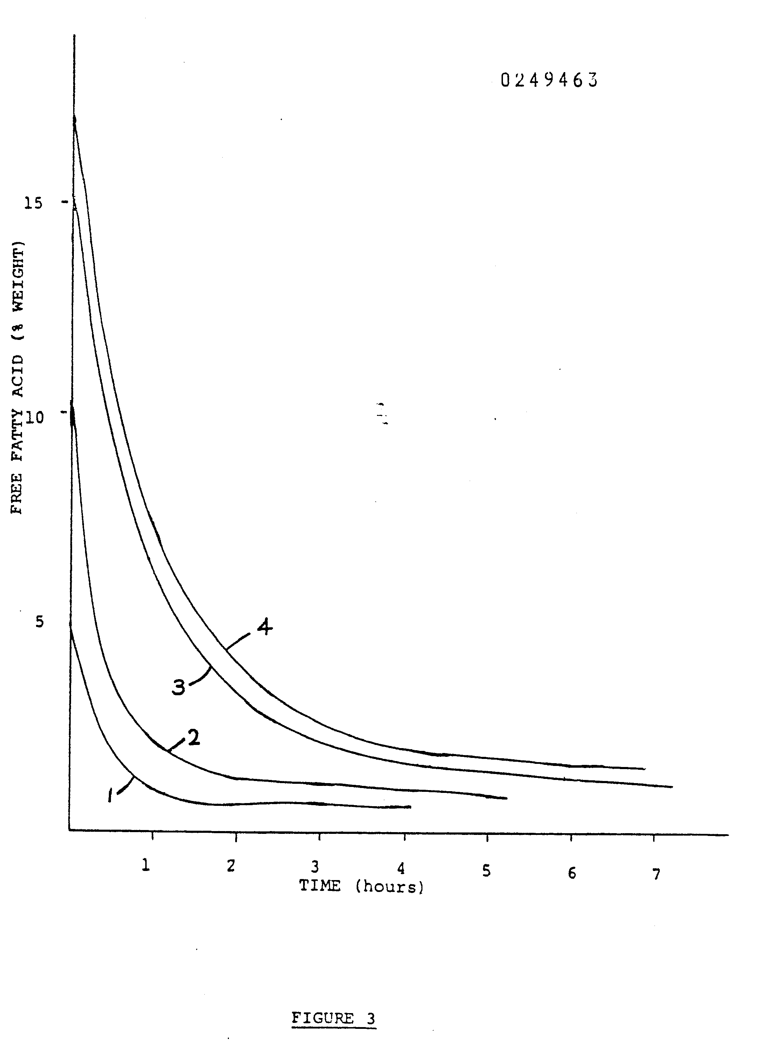

With reference to Fig. 3, each curve represents the results obtained using crude oil having a particular free fatty acid content as follows:

Curve 1 5% FFA
Curve 2 10% FFA
Curve 3 15% FFA
Curve 4 17% FFA

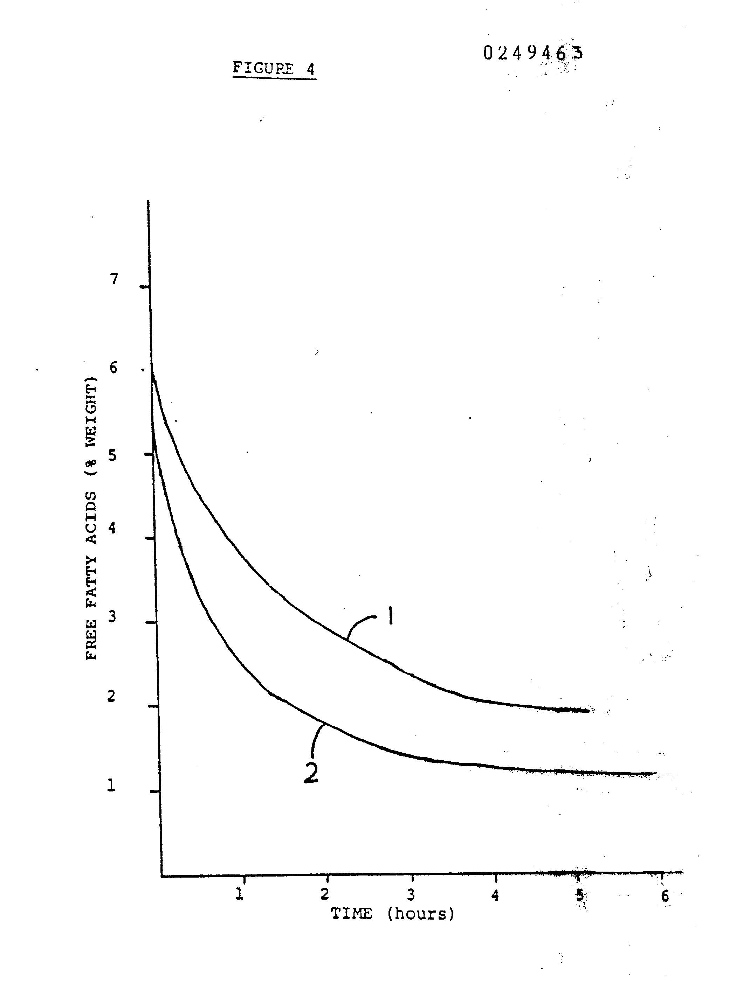

Referring to Fig. 4 which illustrates the effect of moisture content on the esterification of FFA in crude cotton oil and methanol, Curve 1 shows the results obtained using crude cotton oil and Curve 2 shows the results obtained with dried crude cotton oil.

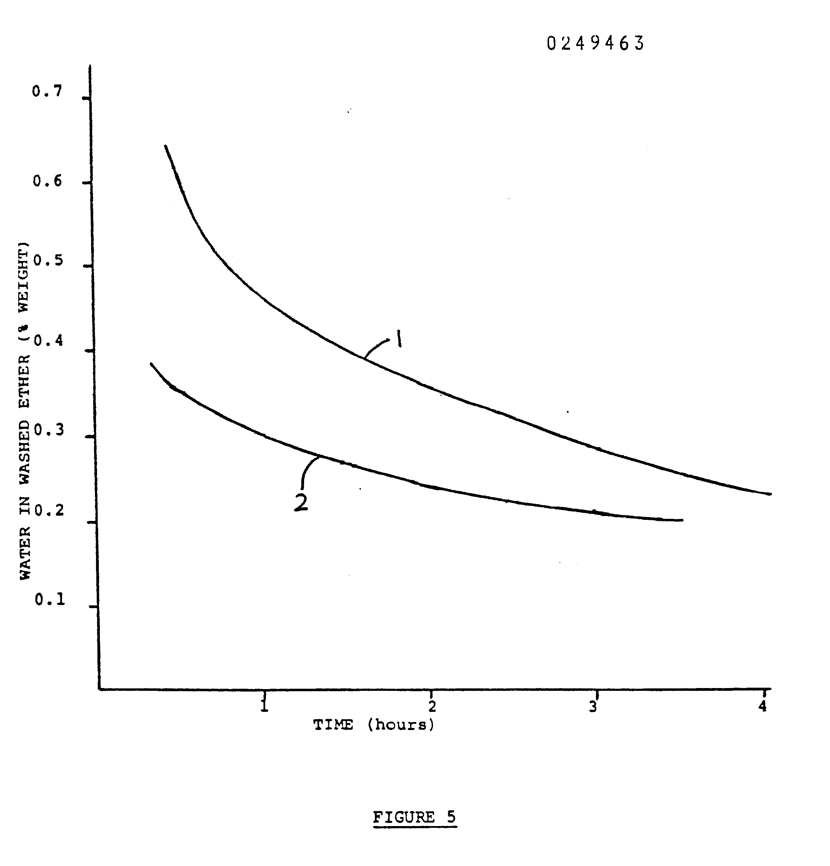

In Fig. 5 which illustrates the effect of acid on the separation of water from washed ester, Curve 1 shows the results of a control experiment with 200ppm Teric N30 and 400ppm NaCl; and Curve 2 shows the results using 200ppm Teric N30, 400ppm NaCl and 400ppm $H_3PO_4$.

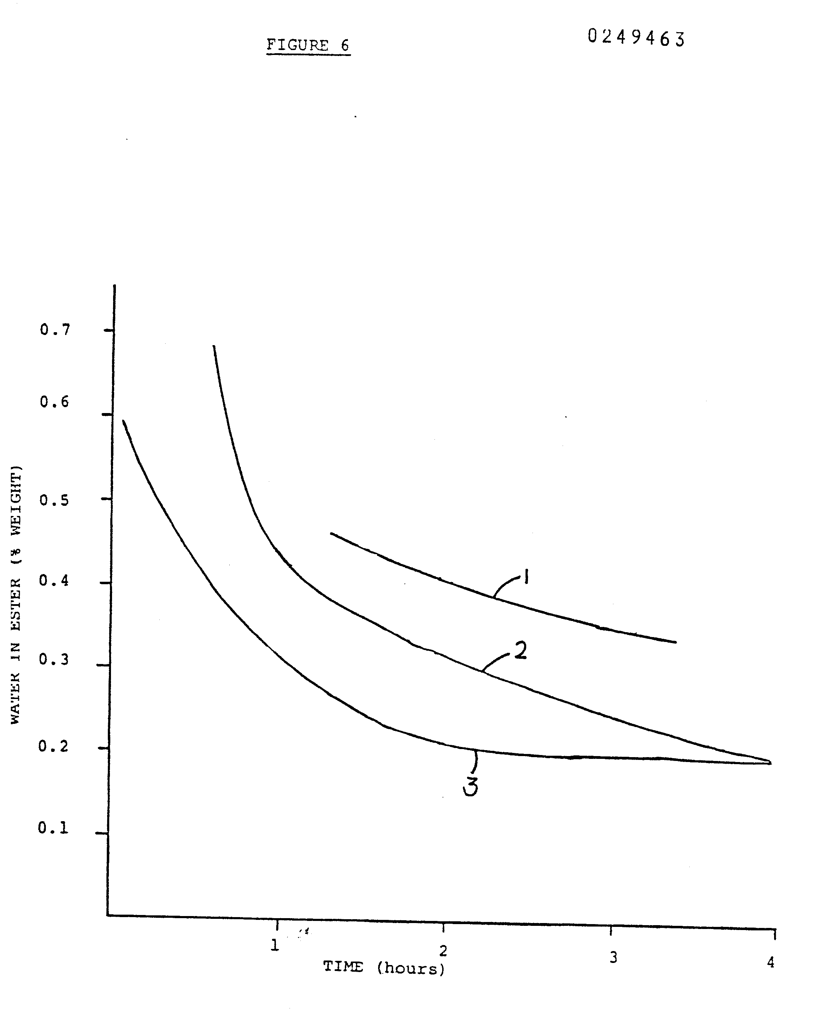

In Fig. 6 which illustrates the effect of temperature on the separation of water from washed ester, Curve 1 shows the results at a temperature of 30°C; Curve 2 at a temperature 45°C; and Curve 3 at a temperature of 30°C. The final water content after standing overnight was 0.15% by weight at 30°C and 45°C; and 0.19% at 60°C.

Notwithstanding other embodiments which may fall within the scope of the present invention one preferred embodiment will now be described by reference to the following example and with reference to the drawings.

EXAMPLE 1

800 litres of crude vegetable oil is pumped into a stainless steel reaction tank and pre-heated to 68°C. The FFA level of the oil is measured and if it is found that the oil contains from 2 to 17% FFA then, after pre-drying to remove excess moisture, the oil is initially reacted with 3.66kg of sulfuric acid and 160 litres of methanol (170 litres for coconut oils). As seen in Fig. 3 the higher the initial FFA level, the longer the reaction time required to substantially convert the FFA to methyl ester by esterification. The reaction times for FFA levels of 2 to 5%, 5 to 10% and 10 to 17% are 90 minutes, 3 hours and 6 hours, respectively.

As will be seen from Fig. 4, the crude oil containing 2 to 17% FFA must be pre-dried to remove excess moisture because of the reversibility of the esterification reaction with water as the other end product. The presence of moisture in the crude oil will slow the reaction and result in a higher FFA level at equilibrium.

Once the FFA is substantially converted, 7.4kg of sodium hydroxide and 100g of Teric N 30 (Trade Mark of ICI) surfactant dissolved in 30 litres of methanol is added to the reaction tank and the mixture is then stirred for about 15 minutes and the temperature maintained at 60°C. Heating is then terminated and the reaction is left to cool and stand for an additional period of 75 minutes.

Where the oil assay discloses a FFA content of less than 2% the oil is only heated to 65°C. Then the oil is immediately reacted with 7.4kg of sodium hydroxide and 100g of Teric N 30 (Trade Mark of ICI) surfactant dissolved in 160 litres of methanol (193 litres for coconut oils) and then stirred, cooled and stood as above.

After standing, the reaction mixture is then transferred to a washing tank. Prior to this, glycerol may be removed from the reaction tank as it forms a substantially separate phase.

The esterified oil in the washing tank is contacted with 129g of Teric N 30 (Trade Mark of ICI) surfactant, 129g of phophoric acid and 258g of sodium chloride dissolved in water and made up to a volume of 2 litres. About 120 litres of wash water is then added and the mixture stirred gently for about 1 hour before being allowed to separate into the aqueous phase by standing for about 30 minutes. During all this time the mixture is maintained at a temperature of 45°C which, as can be seen from Fig. 6, is the optimal temperature to obtain a reasonable separation rate without a high water content in the ester due to increased water solubility in ester.

With regard to Fig. 5 it is apparent that the presence of the phosphoric acid ensures that water separation is increased both in rate and yield.

At the end of the settling period, the ester phase is pumped out to a fuel storage tank. The ester phase may be further purified prior to storage by pre-pumping it through first a centrifuge followed by a water haze filter such as a silica gel moisture filter and then a fuel filter to remove the suspended solids.

The product after filtration is ready for use in unmodified diesel engines.

INDUSTRIAL APPLICATION

It should be clear that a variety of oils may be used in the process of the invention. One particular advantage of the process is that it can be used in a small scale operation by a farmer who can devote a small area of his property to the production of seeds such as rape seed, cotton, soy bean, peanut, palm and coconut, and can then use the crop to provide the fuel for running farm equipment to cultivate the crops upon which the farmer depends financially.

An additional advantage of this invention resides in the utilization of a fuel derived from a renewable energy source.

Furthermore the byproducts of this invention may be used in the chemical and polymer industries.

The foregoing describes only one embodiment of the present invention and modifications obvious to those skilled in the art, can be made thereto without departing from the scope of the present invention.

**Claims**

1. A process for the production of a bio-fuel comprising the steps of:

(1) reacting a crude triglyceride containing substance with an alkanol in the presence of at least one water soluble catalyst so as to convert the fatty acids of the triglyceride containing substance to alkyl esters thereof, and

(2) washing the product of step 1 in the presence of an aqueous wash preparation so as to form an aqueous/organic phase system, wherein said catalyst(s) is/are washed from the reaction mixture into the aqueous phase.

2. A process according to Claim 1 wherein the triglyceride containing substance is a crude vegetable oil, a seed oil, tallow or an animal fat or oil, or mixture thereof.

3. A process according to Claim 1 wherein triglyceride containing substances having a high free fatty acid content are pre-dried.

4. A process according to Claim 1 wherein the catalysts comprise an esterification catalyst to convert free fatty acids to esters and a transesterification catalyst to convert triglyceride fatty acids to esters.

5. A process according to Claim 4 wherein the esterification catalyst in an acidic catalyst, added to the triglyceride containing substance first, and once all the free fatty acids have been esterified, a basic transesterification catalyst is added in excess to both neutralize any remaining acidic esterification catalyst and catalyse the transesterification step.

6. A process according to Claim 5 wherein the acidic esterification catalyst is sulfuric acid and the basic transesterification catalyst is sodium hydroxide.

7. A process according to Claim 4 wherein a surfactant is added with the transesterification catalyst.

8. A process according to Claim 7 wherein the surfactant is nonylphenol ethoxylate.

9. A process according to Claim 1 wherein the wash preparation comprises a surfactant, a strong salt solution and a desaponificant.

10. A process according to Claim 9 wherein the surfactant is nonylphenol ethoxylate, the salt solution is sodium chloride solution and the desaponificant is phosphoric acid.

11. An apparatus suitable for washing a first phase of a two phase liquid with the second phase of the liquid, comprising a mixing tank containing said two phase liquid, a means for forming droplets of the said second phase within the first phase, and a means for mixing the droplets throughout the first phase without producing an emulsion of the two liquids.

12. An apparatus according to Claim 11 wherein the means for forming droplets comprises a propellor disposed such that droplets of the second phase are produced in the first phase, and wherein the means for mixing comprises flat blades disposed within the first phase, both the means for forming droplets and the mixing means attached to a variable speed motor via a drive shaft.

13. A method of washing a hydrophobic liquid with an aqueous liquid comprising forming droplets of the aqueous liquid within the hydrophobic liquid, mixing said droplets through said hydrophobic liquid and allowing the aqueous droplets to settle out of the hydrophobic liquid.

14. A method according to Claim 13 wherein the apparatus of either one of claims 11 or 12 is employed.

FIGURE 1

oil

bio-catalyst B
part 1

bio-catalyst B
part 2

```
+---+  pre-heat   +---+  esterification  +---+  Trans-          +---+
| 1 | ---------> | 1 | --------------> | 1 | esterification-> | 1 | --> glycerol
+---+   68°C      +---+    60°C          +---+    60°C          +---+     storage
```

```
drain        +---+  washing process   +---+
wash water <-| 2 | <--------------- | 2 | <-- bio-wash
             +---+    45°C. 1½ hr      +---+      water
               |
               v
             +---+        +---+
             | 3 | -----> | 4 | -----+
             +---+        +---+      |
                                     v
                                  +---+     +---+
                                  | 5 |---->| 6 |
                                  +---+     +---+
```

0249463

0249463

FIGURE 2

0249463

FIGURE 3

FIGURE 4

FIGURE 5

FIGURE 6

0249463